# EUROPEAN PATENT APPLICATION

(11) **EP 2 943 039 A1**
(43) Date of publication of application: **11.11.2015**
(21) Application number: 14735091.2
(22) Date of filing: 03.01.2014
(51) Int. Cl.: H04W 88/02, G06Q 50/10, G06F 3/00

(54) **USER TERMINAL DEVICE FOR GENERATING PLAYABLE OBJECT, AND INTERACTION METHOD THEREFOR**

(30) Priority: 03.01.2013 KR 20130000729
(71) Applicant: Samsung Electronics Co., Ltd., Suwon-si, Gyeonggi-do 443-742 (KR)
(72) Inventor: MOON, Min-jeong, Seoul 150-971 (KR); CHANG, Woo-yong, Yongin-si Gyeonggi-do 446-715 (KR); CHO, Hyung-rae, Seoul 138-838 (KR); HAN, Chul-ho, Seoul 133-804 (KR)
(74) Representative: Birchenough, Lewis
(86) International application number: PCT/KR2014/000067
(87) International publication number: WO 2014/107059

(57) **Abstract**

Disclosed is a user terminal device. The device of the present invention comprises: a storage unit; a communication unit for performing communication with an external device; a display unit for displaying an image stored in the storage unit or an image received via the communication unit; an object generating unit for generating an interactive object that is to be added to the displayed image and generating a playable object by adding the interactive object to the image; and a control unit for displaying the playable object via the display unit, transmitting the playable object to the external device via the communication unit, and sharing the playable object with the external device. Thus, the device of the present invention may perform interaction with the external device.

## Description

### [Technical Field]

The present invention relates to a user terminal device and an interaction method thereof, and more particularly, to a user terminal device capable of interacting with other devices by generating a playable object, and an interaction method thereof.

### [Background Art]

In accordance with the development of an electronic technology, various types of user terminal devices have been developed and spread. Particularly, recently, devices having various accompanying functions, such as a smart phone or a tablet personal computer (PC) have been mainly spread.

A user may communicate with other users using the user terminal devices. Particularly, the user may interact with other people anytime, anywhere through a social network service (SNS), a blog, or the like. In these social networks, sympathy is the most important element. That is, when the user uploads any content such as an image, a photograph, or the like, in a cyber space, other people express sympathy by uploading an opinion on the content, or the like, in a reply form. This function is one of the largest causes owing to which the social network service is rapidly spread.

However, a method of expressing the sympathy on the cyber space is very restrictive. That is, people may express the sympathy using various means such as a facial expression, a gesture, an intonation, a tone, and the like, in addition to a word or a language in a real world, but should express their emotion or opinions using only restrictive means such as an emoticon, a text input, a button selection, and the like, in the cyber space. Therefore, it was difficult to effectively transfer detailed emotions or opinions of the users.

Therefore, the demand for a method capable of effectively interacting with other users through a user terminal device has increased.

### [Disclosure]

### [Technical Problem]

The present invention provides a user terminal device capable of performing an interaction by generating a playable object, and an interaction method thereof.

### [Technical Solution]

According to an aspect of the present invention, a user terminal device includes: a storing unit; a communicating unit performing communication with an external device; a display unit displaying an image stored in the storing unit or an image received through the communicating unit; an object generating unit generating an interactive object that is to be added to the displayed image and adding the interactive object to the image to generate a playable object; and a controlling unit displaying the playable object through the display unit and transmitting the playable object to the external device through the communicating unit to share the playable object with the external device.

The controlling unit may modify the playable object depending on a user gesture for the playable object displayed on the display unit when the user gesture is sensed and transmit the modified playable object to the external device to share the modified playable object with the external device.

The communicating unit may receive a modified playable object when a modification for the playable object is made on a screen of the external device. In this case, the controlling unit may display the received playable object through the display unit to allow the received playable object to interwork with the screen of the external device.

The controlling unit may control the object generating unit to generate the interactive object using an attribute of a selected music content when one of music contents pre-stored in the storing unit is selected.

The object generating unit may generate the interactive object by reflecting surrounding environment information.

The controlling unit may display a set screen for an attribute parameter of the interactive object on the display unit when an adjusting command for adjusting the playable object is input, and control the object generating unit to adjust a display attribute of the interactive object depending on a set value when the attribute parameter value is set through the set screen.

The controlling unit may control the object generating unit to generate an interactive object representing an animation effect when an animation menu is selected.

The external device may be at least one of another user terminal device, a web server, a cloud server, and a social network service (SNS) server. In addition, the controlling unit may allow the playable object to be included in a reply message for a content page provided from the external device and transmit the reply message to the external device.

According to another aspect of the present invention, an interaction method using a user terminal device includes: displaying an image; generating an interactive object that is to be added to the image; generating a playable object by adding the interactive object to the image; displaying the playable object; and transmitting the playable object to an external device to share the playable object with the external device.

The interaction method using a user terminal device may further include: sensing a user gesture for the displayed playable object; modifying the playable object depending on the user gesture; and transmitting the modified playable object to the external device to share the modified playable object with the external device.

The interaction method using a user terminal device may further include: receiving a modified playable object when a modification for the playable object is made on a screen of the external device; and displaying the received playable object to allow the received playable object to interwork with the screen of the external device.

The interaction method using a user terminal device may further include displaying a selection screen for music contents stored in the user terminal device.

Here, the interactive object may be generated depending on an attribute of a music content selected on the selection screen.

The interactive object may be generated depending on surrounding environment information.

The interaction method using a user terminal device may further include: displaying a set screen for an attribute parameter of the interactive object; and adjusting a display attribute of the interactive object depending on an attribute parameter value set through the set screen.

The interaction method using a user terminal device may further include displaying an animation menu. Here, the interactive object may include an object for representing an animation effect when the animation menu is selected.

The external device may be at least one of another user terminal device, a web server, a cloud server, and a social network service (SNS) server.

The playable object may be included in a reply message for a content page provided from the external device.

### [Advantageous Effects]

As described above, according to various exemplary embodiments of the present invention, the user terminal device generates the playable object in which the interactive object and the image are combined with each other and shares the playable object with another user terminal device, thereby making it possible to perform an interaction.

### [Description of Drawings]

FIG. 1 is a block diagram illustrating a configuration of a user terminal device according to an exemplary embodiment of the present invention;
FIG. 2 is a flow chart for describing an interaction method according to an exemplary embodiment of the present invention;
FIG. 3 is a view for describing a process of generating a playable object by combining an image and an interactive object with each other;
FIG. 4 is a view for describing a method of uploading a playable object on a social network screen;
FIGS. 5A to 5D are views for describing a process of switching an interaction screen;
FIG. 6 is a flow chart for describing a method in which the user terminal device shares a screen with another user terminal device;
FIG. 7 is a view for describing a method of modifying a playable object;
FIGS. 8A and 8B are views for describing a method in which a playable object is modified and shared with another user terminal device;
FIG. 9 is a view for describing a method of combining an interactive object generated by reflecting surrounding environment information with an image;
FIG. 10 is a view for describing a method of changing a display attribute of a playable object;
FIG. 11 is a screen for describing a set screen for an attribute parameter;
FIG. 12 is a view for describing a process of generating a playable object having an animation effect; and
FIG. 13 is a view for describing an example of a detailed configuration of an object generating unit.

### [Best Mode]

Hereinafter, the present invention will be described in detail with reference to the accompanying drawings.

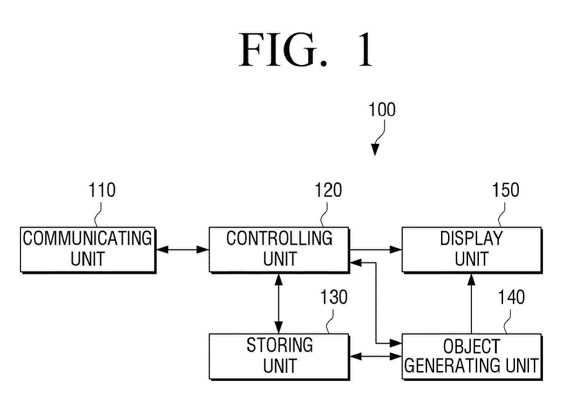

FIG. 1 is a block diagram for describing a configuration of a user terminal device according to an exemplary embodiment of the present invention. As illustrated in FIG. 1, the user terminal device 100 is configured to include a communicating unit 110, a controlling unit 120, a storing unit 130, an object generating unit 140, and a display unit 150.

The user terminal device 100 may be implemented by various devices such as a cellular phone, a tablet personal computer (PC), a laptop computer, a PC, a television (TV), a personal digital assistances (PDA), an electronic organizer, and the like.

The communicating unit 110 means a component performing communication with an external device depending on various communication protocols. The communicating unit 110 may perform communication depending on various communication protocols such as WiFi, Bluetooth, Zigbee, near field communication (NFC), 3rd generation (3G), 3rd generation partnership project (3GPP), long term evolution (LTE), and the like. The external device may be various devices such as another user terminal device, a web server, a cloud server, a social network service (SNS) server, and the like. The communicating unit 110 may receive an application as well as various data such as image, text, screen data, and the like, from the external device.

The storing unit 130 is a component in which various programs, data, contents, and the like, may be stored. The contents may include an image, a text, a photograph, and the like.

The controlling unit 120 may display the image stored in the storing unit 130, an image received from the communicating unit 110, or the like, on the display unit 150. The image may be in various types such as a photograph, a picture, an album cover, and the like. The controlling unit 120 may display the image in the case in which a photographing operation is performed or a gallery program is executed. Alternatively, the controlling unit 120 may display a screen including the image, such as a web screen, a social network screen, or the like, in the case in which a web browser is executed or an access to a social network server is performed.

The object generating unit 140 may generate an interactive object that is to be added to the displayed image, and generate a playable object by adding the interactive object to the image.

The interactive object may be implemented by a graphic image, a moving picture, a background music, or the like, that may be overlapped on an image layer. The interactive object may also be called an image filter, an interactive filter, or the like. The graphic image, the background music, or the like, may be generated so as to be selectively playable. Particularly, the graphic image may also be generated as a fluid image. The playable object means an object having a form in which an original image and the interactive object are combined with each other. The controlling unit 120 may display the playable object on the display unit 150. When the playable object is selected, the controlling unit 120 plays the playable object. In detail, the controlling unit 120 displays the original image included in the playable object and plays and outputs the background music while fluidly changing the graphic image added to the original image. Alternatively, the graphic image configuring the interactive object may be implemented as a fixed image or be implemented as a moving picture.

The controlling unit 120 may transmit the playable object to the external device through the communicating unit 110. Therefore, the user terminal device may share the playable object with the external device. The playable object may be variously modified by a user. In addition, in the case in which the playable object is modified by the external device, the modified playable object may also be received and shared.

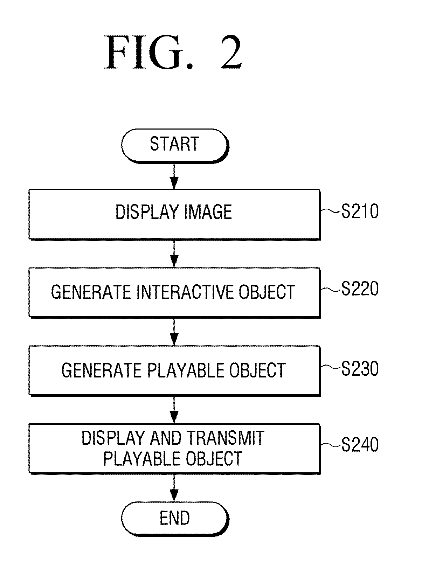

FIG. 2 is a flow chart for describing an interaction method according to an exemplary embodiment of the present invention. As illustrated in FIG. 2, the user terminal device generates the interactive object (S220) when an event in which the playable object is to be generated occurs in a state in which the image is displayed (S210). The image may be an image stored in the user terminal device or an image received from the external device. The image received from the external device may also be an image included in the social network screen. In addition, as the event, there may be various events such as an event in which the displayed image is selected, an event in which a menu for conversion into the playable object among menus displayed on the screen is selected, an event in which one image is selected on the social network screen, and the like.

When the interactive object is generated, the user terminal device 100 generates the playable object by combining the displayed image and the interactive object with each other (S230). Then, the user terminal device 100 transmits the generated playable object to the external device while displaying the playable object, thereby sharing the playable object with the external device (S240).

A form and a sharing method of the playable object may be variously set according to exemplary embodiments. Next, various exemplary embodiments of an interaction method using the playable object will be described in detail.

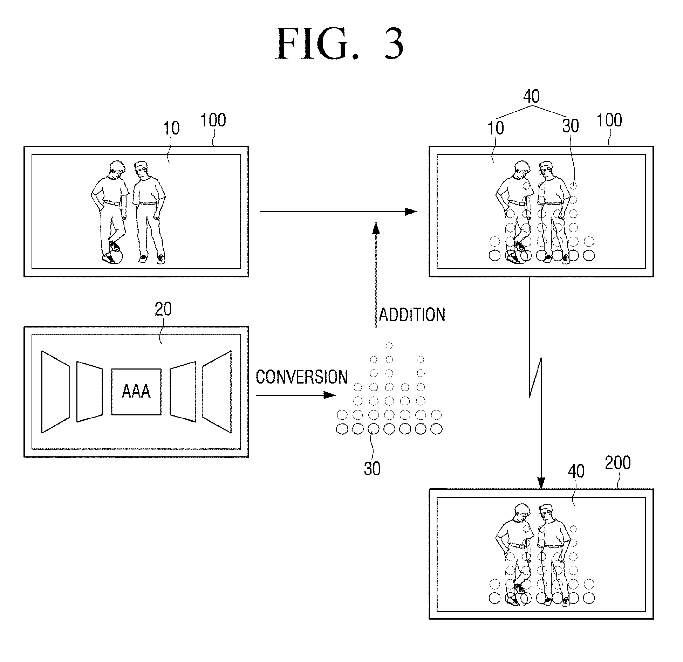

As illustrated in FIG. 3, the user terminal device 100 displays one image 10. The user may select a content for configuring the interactive object that is to be added to the image 10. In detail, the controlling unit 120 displays a selection screen 20 for a music content through the display unit 150. According to exemplary embodiments, a condition in which the selection screen 20 is displayed may be changed. For example, the selection screen 20 may be displayed so as to substitute for an original image 10 when any point in the image 10 is touched and be displayed when a conversion menu among menus provided for the image 10 is selected. Alternatively, unlike FIG. 3, the selection screen 20 may be displayed together with the image 10 at one side within the image 10.

Although the case in which various images corresponding to the music contents are displayed in the selection screen 20 has been illustrated in FIG 3, icons or lists for the music contents may also be displayed.

When at least one music content is selected in the selection screen, the controlling unit 120 controls the object generating unit 140 to generate an interactive object 30 using attributes of the selected music content. The attributes of the music content may include various information such as an artist, a genre, album information, a music video, atmosphere information, a cover image, and the like. The object generating unit 140 may generate the interactive object 30 in various forms such as a metaphysical image form, a random image form, an equalizer image form, a graph image form, a figure image form, and the like, based on these attributes. In FIG. 3, the interactive object 30 having the metaphysical image form is illustrated.

The interactive object may be generated by various methods according to exemplary embodiments.

For example, the object generating unit 140 may generate the interactive object 30 using template data stored in the storing unit 130. That is, various templates may be pre-stored depending on an artist, a genre, album information, and the like. The object generating unit 140 first selects a template corresponding to the attribute of the selected music content. The template data may be provided together with the music content from a content manufacture when the music content is purchased or may be separately purchased.

Alternative, the object generating unit 140 may select the template based on various additional information. As the additional information, there may be information such as a time zone or a zone in which the playable object is generated, weather, a sex of a user, an age of the user, a job of the user, and the like. For example, in the case of a rainy winter night, a template in which an image of a rainy or snowy street is represented by a dark color may be selected. Alternatively, in the case in which the user is a woman of early 10s, a template representing a cartoon, a figure character, or the like, may be selected. Information on the template may be arranged in a form of a table and be pre-stored in the storing unit 130, and the object generating unit 140 may select the template based on the table in which the information on the template is arranged.

When the temperate is determined, the object generating unit 140 analyzes atmosphere information, a rhythm, a beat, a chord, or the like, of the music content to determine a play attribute such as a change pattern, a change period, a change speed, or the like, of the template. The object generating unit 140 renders the interactive object 30 on the image 10 depending on the determined play attribute to generate a playable object 40.

Alternatively, the object generating unit 140 may generate the interactive object 30 using a metaphysical image randomly modified depending on a time without a separate template.

When the interactive object 30 is added to generate the playable object 40, the user terminal device 100 may transmit the playable object 40 to a user terminal device 200 of another user. In this case, communication may be directly connected in a pear to pear (P2P) communication scheme or the playable object 40 may be indirectly transferred through various networks.

Although the case in which the user terminal device of another user is selected and the playable object is directly transferred to the user terminal device of another user has been described in FIG. 3, the playable object may be uploaded in a reply form on a screen provided by a social network server, a cloud server, or the like.

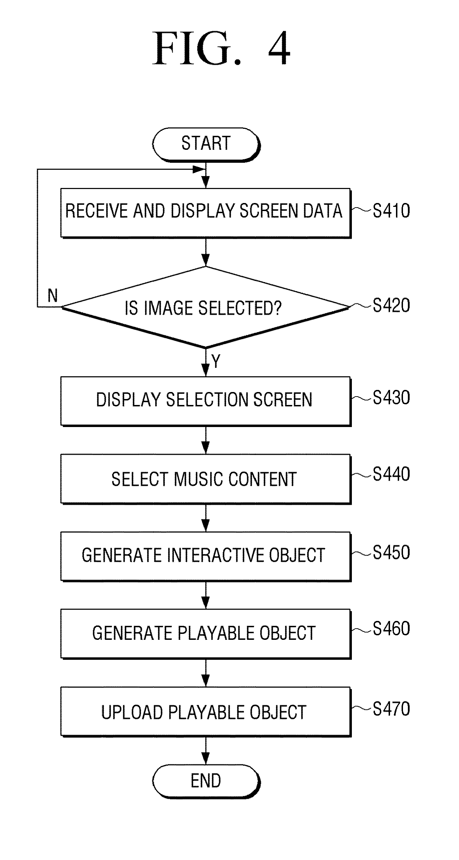

FIG. 4 is a flow chart for describing an interaction method according to another exemplary embodiment of the present invention. As illustrated in FIG. 4, the user terminal device may receive screen data for configuring a content page from a social network server, a cloud server, a web server, or the like, and display the content page (S410). When a user selects an image in the content page (S420) in this state, a selection screen for music contents is displayed (S430).

The user may select at least one music content on the selection screen (S440). When the music content is selected, the user terminal device 100 generates an interactive object by reflecting an attribute of the selected music content (S450). Then, the generated interactive object is overlapped with an image to generate a playable object (S460).

After the playable object is generated, when the user selects a menu for storing the playable object, the user terminal device 100 uploads the generated playable object to the external device providing the screen data (S470). Therefore, the playable object may be registered on the screen.

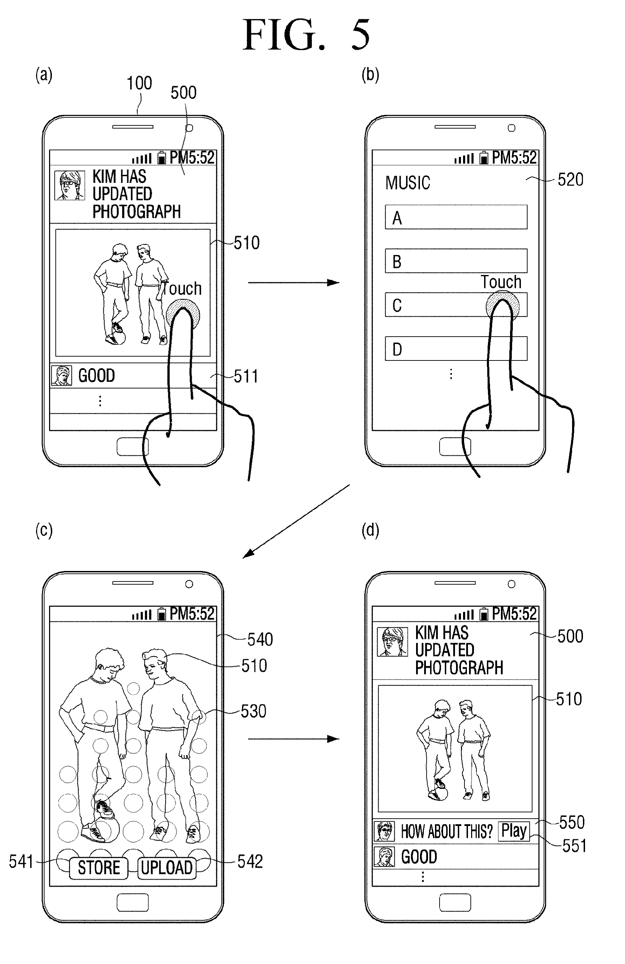

FIGS. 5A to 5D are views for describing a process of uploading a playable object in a reply form. As illustrated in FIG. 5A, the user terminal device 100 displays a content page 500 provided from the external device. The content page 500 may be provided from a social network service server. An image 510, a reply 511, and the like, updated by another user are displayed in the content page 500.

When a user selects the image 510 in this state, the controlling unit 120 displays a selection screen 520 for the music content stored in the storing unit 130, as illustrated in FIG. 5B. When one music content is selected in this state, the object generating unit 140 generates an interactive object 530 and adds the interactive object 530 to the image 510 to generate a playable object 540. The controlling unit 120 displays the generated playable object 540 on a screen. As illustrated in FIG. 5C, menus such as a storing menu 541, an upload menu 542, and the like, may be displayed on the screen in which the playable object 540 is disposed.

When the user selects the storing menu 541, the playable object 540 is stored in the storing unit 130. On the other hand, when the user selects the upload menu 542, the controlling unit 120 allows the playable object 540 to be included in a reply message for the content page and transmits the reply message to a server through the communicating unit 110. Therefore, a reply 550 is registered in the content page 500. A menu 551 that may play the playable object as well as a text separately input by the user and an image pre-registered by the user is displayed on the reply 550. The content page 500 including the reply 550 is displayed in common on all of the user terminal devices accessing the server. When the menu 551 is selected in the user terminal device on which the content page 500 is displayed, the playable object is played in the user terminal device. Therefore, the image 510 with which the interactive image 30 is overlapped is displayed while playing and outputting the music content. The interactive image 530 is fluidly changed depending on a change attribute.

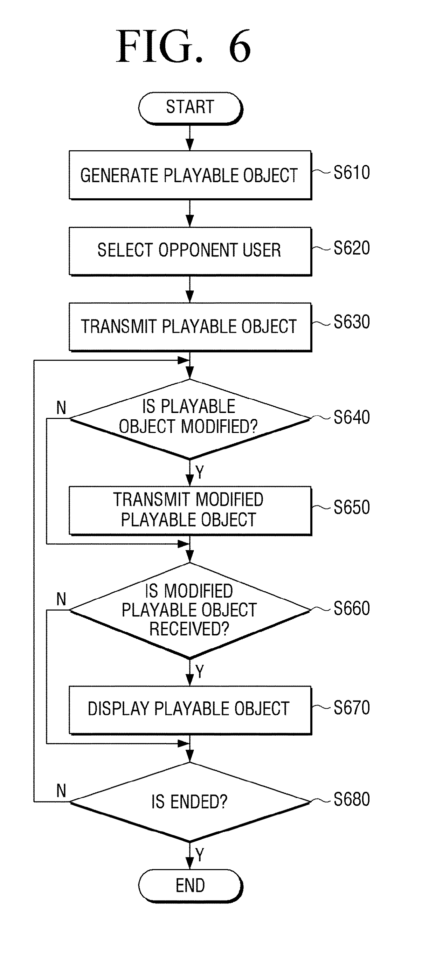

FIG. 6 is a flow chart for describing an interaction method of a user terminal device according to another exemplary embodiment of the present invention. As illustrated in FIG. 6, when a playable object is generated (S610), the user terminal device displays a screen for selecting an opponent user (S620). When the opponent user is selected on the screen, the playable object is transmitted to a device of the opponent user (S630). The device of the opponent user, that is, an external device displays the received playable object on a screen. Therefore, the playable object may be shared between a plurality of devices. Each device may play the playable object to confirm an interactive object and a music content together with an image.

Meanwhile, the playable object may be modified depending on a user gesture such as drawing. For example, when the user touches the screen to perform drawing in a state in which the playable object is displayed on the screen, a form of the interactive object may be modified depending on a drawing trajectory. Therefore, when the modified playable object is generated (S640), the user terminal device transmits the modified playable object to the external device (S650) while displaying the modified playable object. The external device receiving the modified playable object displays the modified playable object.

In addition, the external device may also modify the playable object. When the playable object is modified, the external device transmits the modified playable object. Therefore, when the modified playable object is received (S660), the received playable object is displayed (S670). Therefore, since a plurality of user terminal devices arbitrarily modify the playable object and share the modified playable object with each other, the users may easily inform the other users of their emotion or opinions on the image.

The user terminal device may perform the steps as described above until an end command for ending the display for the playable object is input, thereby sharing the screen with the other user terminal devices.

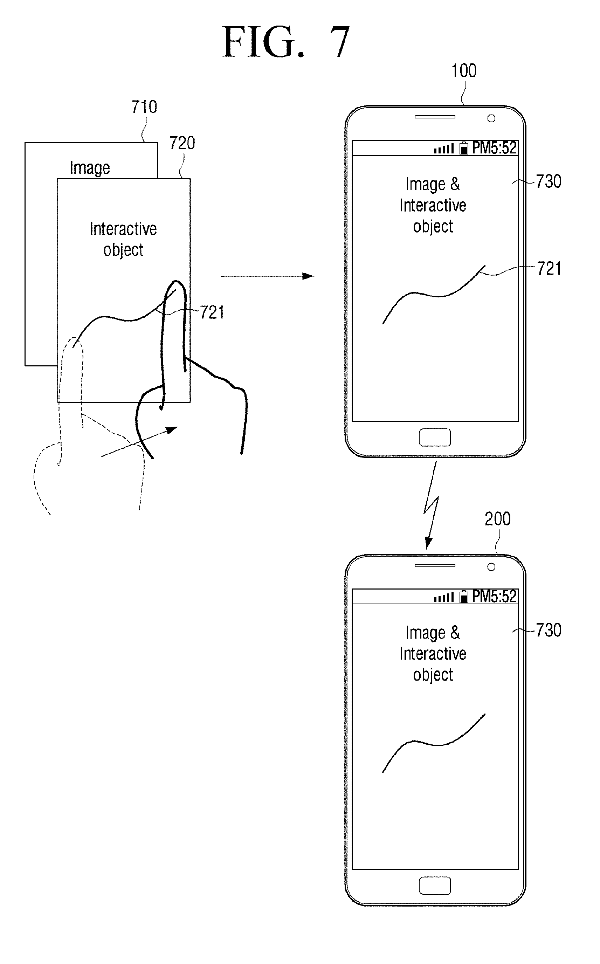

FIG. 7 is a view illustrating a process of modifying a playable object. As illustrated in FIG. 7, in the playable object, a layer 710 in which an image is displayed and a layer 720 in which an interactive object is displayed are displayed. When the user performs drawings on a screen on which the playable object is displayed, the controlling unit 120 calculates pixel coordinate values of touch points at which the drawing is performed. The controlling unit 120 may connect the pixel coordinate values of the touch points to each other to decide a drawing trajectory. The object generating unit 140 changes pixel values of pixels corresponding to the drawing trajectory to render a drawing trajectory 721. Therefore, an interactive object 720 is modified, such that the drawing trajectory 721 is additionally displayed on a playable object 730. The controlling unit 120 transmits the modified playable object 730 to the other user terminal device 200 to share the modified playable object 730 with the other user terminal device 200.

According to exemplary embodiments, the controlling unit 120 may also calculate touch strength and a touch area. When the touch strength is strong and the touch area is wide, the controlling unit 120 may display the drawing trajectory using a thick line. On the other hand, when the touch strength is weak and the touch area is narrow, the controlling unit 120 may display the drawing trajectory using a thin line or display the drawing trajectory using a dotted line, or the like. A coordinate of the touch point, the touch strength, the touch area, or the like, may be calculated using a touch sensor (not illustrated). The touch sensor may be implemented by various types of sensors such as a capacitive type sensor, a resistive type sensor, a piezoelectric type sensor, and the like. The capacitive type sensor uses a scheme of calculating a touch coordinate by sensing micro electricity excited to a body of the user when a portion of the body of the user is touched on a screen of the display unit 150, using a dielectric coated on the surface of the display unit 150. The resistive type sensor uses a scheme of calculating a touch coordinate by sensing that a current flows due to a contact between two electrode plates embedded in the display unit 150 at a touch point in the case in which the user touches the screen. The piezoelectric type sensor uses a scheme of calculating a touch coordinate depending on a change value of an electrical signal output from a piezoelectric element at a point at which pressure is sensed, using the piezoelectric element. As described above, the touch sensor may be implemented in various forms.

Meanwhile, various gestures such as a simple touch, a long touch, a double touch, a flick, a touch and drag, and the like, in addition to the drawing, may be included in the user gesture.

In addition, although the case in which the interactive object is automatically generated due to selection of the music content has been described in the above-mentioned exemplary embodiment, the interactive object may also be manually generated by the user.

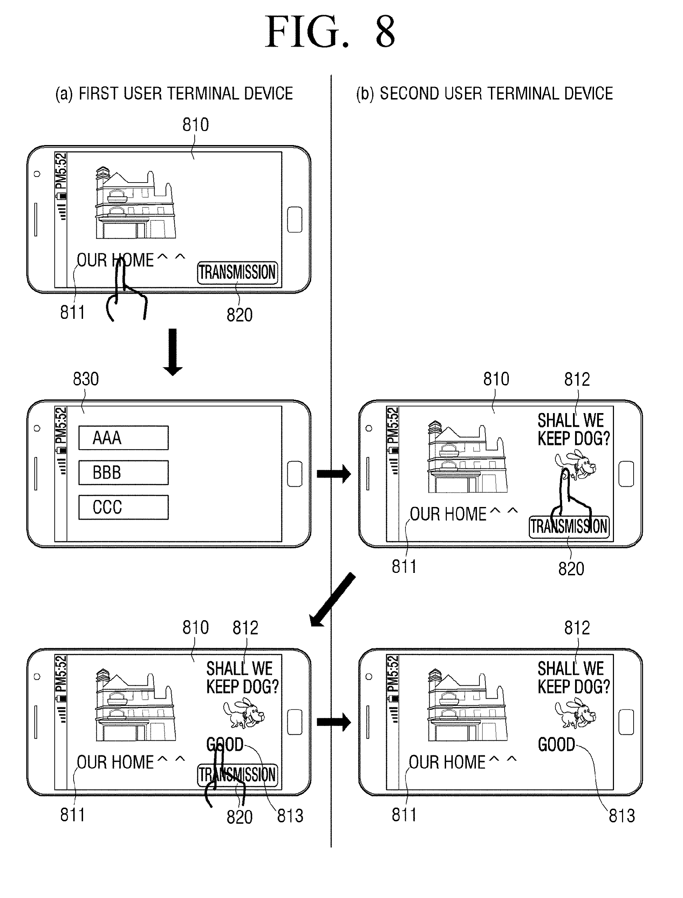

FIGS. 8A and 8B are views for describing a process of performing an interaction between two user terminal devices using a playable object.

FIG. 8A illustrates a screen of a first user terminal device, and FIG. 8B illustrates a screen of a second user terminal device. The first and second user terminal devices mean different user terminal devices. Kinds of these user terminal devices may be the same as or different from each other. For example, the first user terminal device may be a cellular phone, and the second user terminal device may be a tablet PC.

As illustrated in FIGS. 8A and 8B, a user may input various user gestures in a state in which one image 810 is displayed in the first user terminal device. In detail, the user using the first user terminal device makes a drawing gesture or a writing gesture on a screen to draw an object 811. The object 811 drawn depending on this gesture is overlapped with the image 810, such that a playable object is generated. When a transmission menu 820 is selected in a state in which the playable object is generated, the controlling unit 120 displays a screen 830 including information on other people stored in the first user terminal device. Various information including phone numbers, e-mail addresses, home page addresses, and the like, of other people may be displayed on the screen 830. When the user selects one user information on the screen 830, the playable object is transmitted to the second user terminal device corresponding to the selected user information or a server device having a user account corresponding to the selected user information. The case in which the playable object is directly transmitted to the second user terminal device has been illustrated in FIGS. 8A and 8B.

The second user terminal device displays the received playable object 810. In the case in which a music content is included in the playable object 810, the second user terminal device plays the music content while displaying the image. A second user using the second user terminal device performs writing or drawing on the playable object 810 to generate an object 812. Therefore, the playable object 810 is modified into a form including the objects 811 and 812. With respect to the modified playable object, when the transmission menu 820 is selected by the second user terminal device, the second user terminal device transmits the modified playable object 810 to the first user terminal device. The first user terminal device receives the modified playable object 810 through the communicating unit 110 and again displays the modified playable object 810 on the screen. When the first user terminal device again adds an object 813 to modify the playable object 810, it again transmits the modified playable object 810 to the second user terminal device. As described above, the plurality of user terminal devices may allow the screen to interwork with each other while sharing the playable object with each other in real time.

Meanwhile, according to another exemplary embodiment of the present invention, the object generating unit 140 may also generate the interactive object by reflecting surrounding environment information.

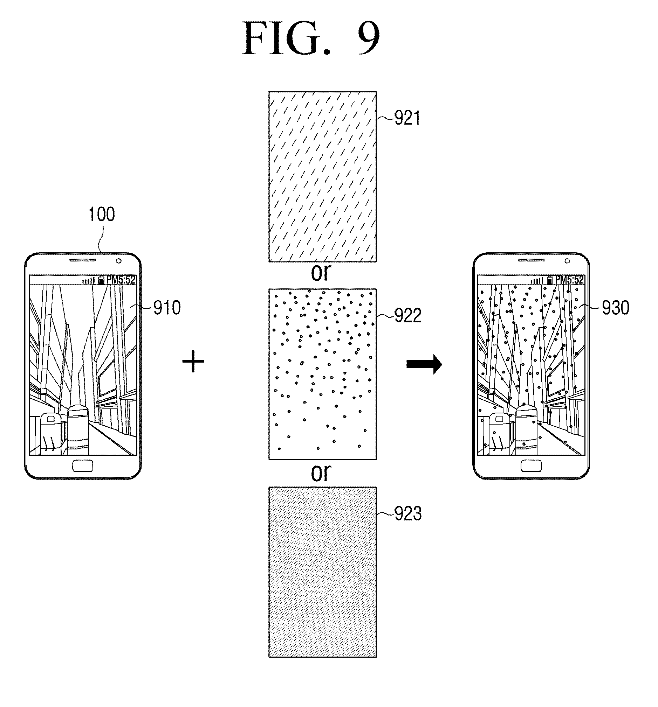

FIG. 9 is a view for describing an operation of a user terminal device according to another exemplary embodiment of the present invention.

As illustrated in FIG. 9, the object generating unit 140 generates an interactive object 921, 922, or 923 by reflecting the surrounding environment information when the image 810 is obtained. The surrounding environment information means information such as surrounding temperature, humidity, weather, altitude, coordinate, nation, zone, noise, illumination, time, and the like, obtained based on a position of the user terminal device. In the case in which the user terminal device directly includes modules such as a thermometer, a hygrometer, an illuminometer, a noise measuring sensor, a global positioning system (GPS) chip, a watch, and the like, it may receive the surrounding environment information from these modules. Alternatively, the user terminal device may also receive the surrounding environment information from the external device through the communicating unit 110. Here, the external device may be devices including the above-mentioned modules, a web server, or the like. Alternatively, information directly input by the user may also be used as the environment information.

The object generating unit 140 generates various interactive objects 921, 922, and 923 depending on the environment information. For example, in the case of using weather information among the environment information, a first interactive object 921 for representing rain, a second interactive object 922 for representing snow, a third interactive object 923 for representing fog, and the like, may be generated. In the case in which time information, in addition to the weather information, is included in the environment information, a color, a background color, or the like, of the interactive object may be adjusted depending on a time. That is, the interactive object may be represented to be dark at night and be represented to be bright in the daytime. Alternatively, in the case in which nation information, zone information, or the like, is included in the environment information, an interactive object including a landmark representatively representing a corresponding nation or zone, an animal and plant image, or the like, may be generated. A kind and a display attribute of these interactive objects may be prepared in advance and stored in the storing unit 130. As described above, the interactive objects may be generated in various forms and schemes.

The object generating unit 140 adds the generated interactive object 921, 922, or 923 to an image 910 to generate a playable object 930. The object generating unit 140 may store the playable object 930 to which the interactive object 921, 922, or 923 is added or transmit the playable object 930 to the external device to share the playable object 930 with the external device. Particularly, the object generating unit 140 may also upload the playable object 930 in a social network service page. Other devices accessing the corresponding page may modify the uploaded playable object 930 to express user opinions or emotion.

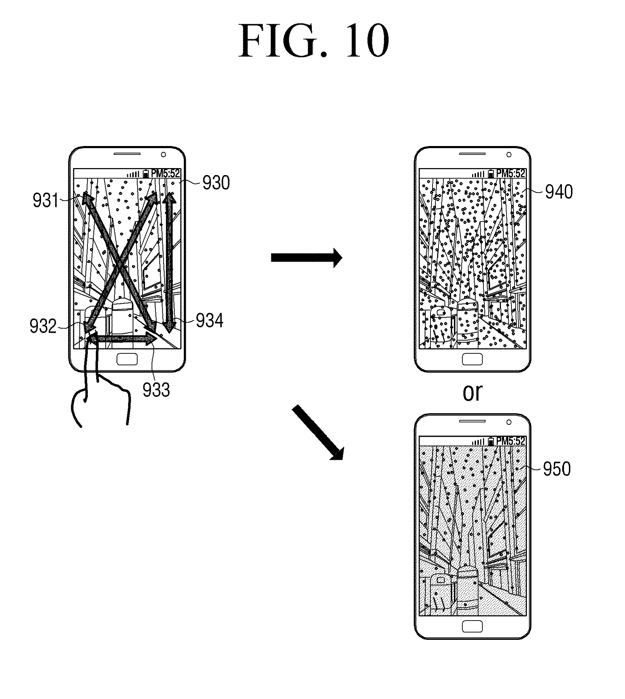

FIG. 10 is a view for describing a method of modifying the playable object 930. In FIG. 10, a state in which the second interactive object 922 among the interactive objects of FIG. 9 is added will be described by way of example.

When the user touches any point on the screen in a state in which the playable object 930 is displayed on the screen, guide images 931, 932, 933, and 934 may be displayed on the screen. Each of the guide images 931, 932, 933, and 934 is an image for guiding a method of adjusting an attribute parameter for displaying the interactive objects. The attribute parameter may be a parameter for setting various attributes such as a sound magnitude, an object size, display strength, an amplitude, transparency, brightness, an object display time, a display period, whether or not a time is displayed, a rhythm, a shape, a position, and the like. Each of the guide images 931, 932, 933, and 934 guides a user gesture that may adjust an attribute value of an attribute parameter corresponding thereto.

For example, in the case in which a first guide image 931 having a diagonal shape intersecting from a left upper end of the screen toward a right lower end thereof is matched to the sound magnitude, the controlling unit 120 may increase the sound magnitude of the music content included in the playable object 930 when the user performs a drag toward the right lower end in a state in which he/she touches a left upper end point and may decrease the sound magnitude when he/she performs a drag in an opposite direction.

In addition, in the case in which a second guide image 932 having a diagonal shape intersecting from an right upper end of the screen toward a left lower end thereof is matched to the object size, the object generating unit 140 may increase an object size when the user performs a drag toward the right upper end in a state in which he/she touches a left lower end point and may decrease the object size when he/she performs a drag in an opposite direction. As illustrated in FIG. 10, in the case of the interactive object 922 including objects such as snow, a size itself of a crystal of snow may be increased.

In addition, in the case in which a third guide image 933 having a horizontal line shape and a fourth guide image 934 having a vertical line shape are matched to the display strength and the transparency, respectively, the object generating unit 140 adjusts the display strength or the transparency depending on a user gesture dragged depending on guided images. When the display strength is adjusted, the playable object may be modified into a form in which the snow more rapidly falls while an amount of the snow is increased or be modified into a form in which a speed in which the snow falls is decreased while an amount of the snow is decreased. A first interactive object 940 illustrated in FIG. 10 shows a state in which the playable object is modified so that a size of the crystal of the snow and an amount of the snow are increased by adjusting the object size and the display strength to be increased.

When the transparent is adjusted, the playable object may be displayed so as to be obscure or clear. A second interactive object 950 illustrated in FIG. 10 shows a state in which the playable object is modified to be obscure.

As illustrated in FIG. 10, the user may modify the playable object in various schemes and share the playable object in the modified state with other users.

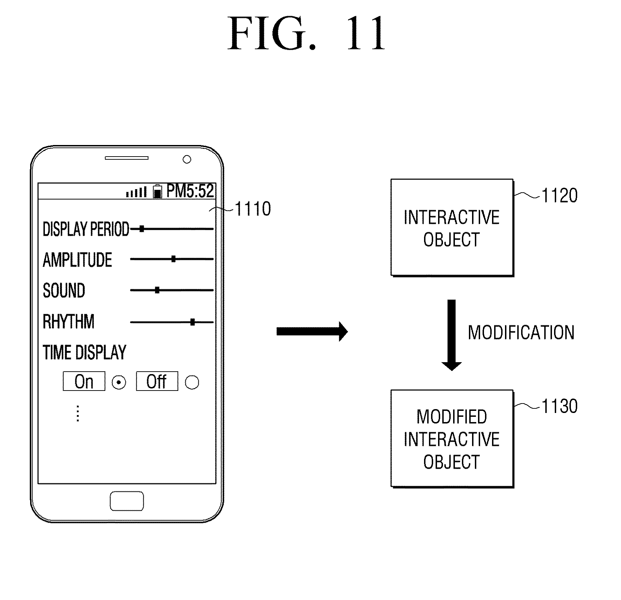

FIG. 11 is a view for describing a method of modifying an interactive object according to still another exemplary embodiment of the present invention.

The controlling unit 120 displays a set screen 1110 for the attribute parameter on the display unit 150 when an adjusting command for adjusting the playable object is input The adjusting command may be input when a long touch or a double touch is performed on the playable object or a separately prepared adjusting menu is selected.

A set region in which a name of the attribute parameter and a value of the attribute parameter may be set is displayed on the set screen 1110. Although the case in which a slide button is displayed in the set region has been illustrated in FIG. 11, a form of the set region may be variously implemented.

When the user sets a value of each attribute parameter, the controlling unit 120 adjusts a display attribute of an interactive object 1120 depending on the set value to control the object generating unit 140 to generate a modified interactive object 1130.

The attribute parameter may be variously provided depending on a condition such as weather, or the like. For example, in the case of snow, a shape or a size of a crystal may be provided as the attribute parameter. In the case of rain, a spreading size may be provided as the attribute parameter, and in the case of a rainbow, a size, a position, or transparency may be provided as the attribute parameter. In addition, in the case of sunlight, a size, a shape, a spreading degree, or the like, of a lens flare may be provided as the attribute parameter.

Meanwhile, the playable object may also be played in an animation form.

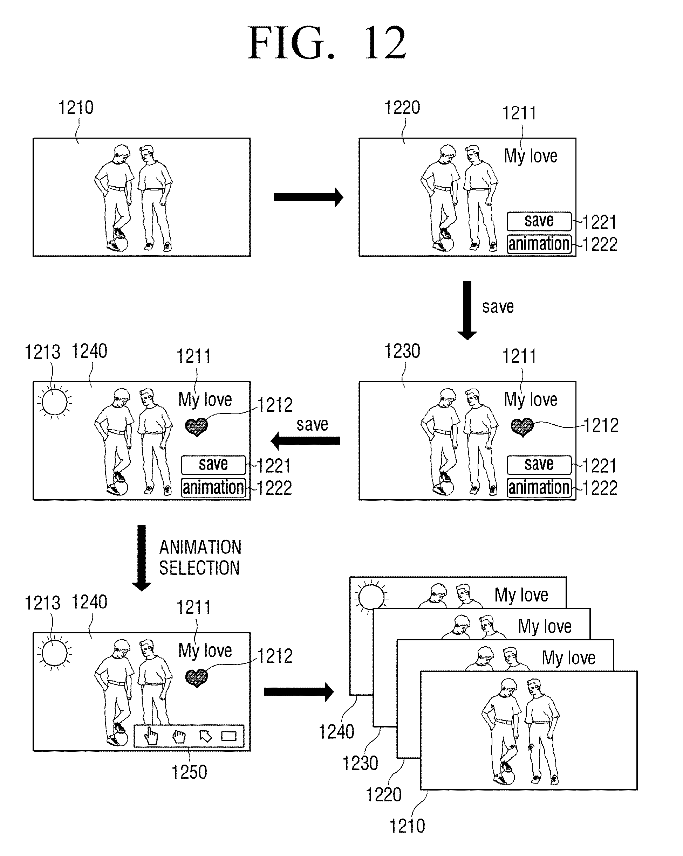

FIG. 12 is a view for describing a method of generating a playable object in a user terminal device according to still another exemplary embodiment of the present invention. As illustrated in FIG. 12, when a user draws an object 1211 in a state in which one image 1210 is displayed, the object generating unit 140 generates a first modified image 1220. Menus such as a storing menu 1221, an animation menu 1222, and the like, may be displayed in the modified image 1220.

When the storing menu 1221 is pressed in a state in which the first modified image 1220 is generated, the first modified image 1220 is stored in the storing unit 130. The user may also sequentially draw objects 1212 and 1213 and select a storing menu to store second and third modified images 1230 and 1240. When the animation menu 1222 is selected in a state in which a plurality of modified images 1220, 1230, and 1240 are stored as described above, a tool region 1250 for setting tools for setting an animation effect may be displayed. Icons corresponding to various tools are displayed in the tool region 1250. When one of the tools is selected, a playable object to which an animation effect corresponding to the corresponding tool is given is generated. For example, in the case in which an icon having a hand shape is selected, an animation effect as if leaves of a book are turned over by a hand may be given.

The generated playable object may be shared between the user terminal device and the external device. When the playable object is selected by the external device, the playable object is played. That is, an initial image 1210 is first displayed, and is switched into the first modified image 1220 while the animation effect as if leaves of a book are turned over by a hand image is displayed. Next, the first modified image 1220 is sequentially switched into the second and third modified images 1230 and 1240.

In addition, the animation effect may be variously generated depending on a user gesture. For example, when the user input a gesture such as a pinch, a pat, a punch, or the like, on an image, a gesture animation effect such as lifting up, shaking, or the like, the image depending on the gesture may be given. Alternatively, in the case in which a sticker tool is selected, a sticker animation effect such as attaching, detaching, or the like, a sticker may be given, and in the case in which a picture is drawn as if doodling on an image, a doodling animation effect such as doodling, or the like, may be given. These animation effects may be mixed with each other and be used, and this process may be recorded in the storing unit 130 to thereby be reflected in the playable object.

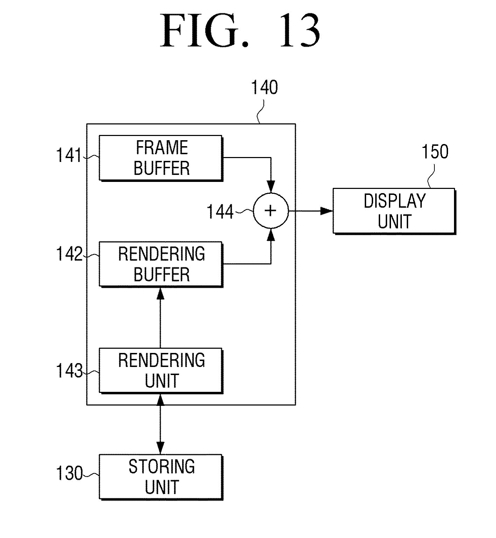

FIG. 13 is a block diagram illustrating a detailed configuration of the object generating unit 140 that may be applied to various exemplary embodiments as described above. As illustrated in FIG. 13, the object generating unit 140 may include a frame buffer 141, a rendering buffer 142, a rendering unit 143, and an adding unit 144.

The frame buffer 141 stores an image stored in the storing unit 130 or an image received through the communicating unit 110 therein.

The rendering buffer 142 stores a graphic image generated by the rendering unit 143 therein.

The rendering unit 143 calculates attribute values such as a coordinate value, a form, a size, a color, and the like, of an interactive object using a program and data stored in the storing unit 130. In the case in which the template data are stored, the template data may be used, and in the case in which the template data are not stored, the attribute values may be randomly determined. The rendering unit 143 generates the interactive object based on the calculated attribute values. The generated interactive object is stored in the rendering buffer 142.

The adding unit 144 adds the image stored in the frame buffer 141 and the interactive object stored in the rendering buffer 142 to each other to generate a playable object. The generated playable object may be stored in the storing unit 130 or be displayed on the display unit 150.

As described above, according to various exemplary embodiments of the present invention, a playable object having a form in which a layer receiving an input of the user is added to an existing content may be generated. As the playable object, various images such as an album cover, an artist photograph, and the like, in addition to an image such as a photograph, may be used.

The playable object is not limited to a specific service or application, but may be applied to several services. In addition, the playable object may be modified by manipulations of a user or another user. Therefore, participational communication is enabled.

Therefore, a new type of content for fully expressing emotion of the user may be generated, and a new communication channel reacting to a play of the users may be generated. In addition, in the case of an exemplary embodiment of generating the interactive object using the surrounding environment information, reality felt by the user may also be reflected in a photograph.

The interaction method according to various exemplary embodiments described above may be coded as software and be stored in a non-transitory computer readable medium. The non-transitory computer readable medium may be connected to or mounted in various types of user terminal devices as described above to support the corresponding devices so as to execute the above-mentioned methods.

The non-transitory computer readable medium is not a medium that stores data therein for a while, such as a register, a cache, a memory, or the like, but means a medium that semi-permanently stores data therein and is readable by a device. In detail, various applications or programs described above may be stored and provided in the non-transitory computer readable medium such as a compact disk (CD), a digital versatile disk (DVD), a hard disk, a Blu-ray disk, a universal serial bus (USB), a memory card, a read only memory (ROM), or the like.

Although the exemplary embodiments of the present invention have been illustrated and described hereinabove, the present invention is not limited to the above-mentioned specific exemplary embodiments, but may be variously modified by those skilled in the art to which the present invention pertains without departing from the scope and spirit of the present invention as disclosed in the accompanying claims. These modifications should also be understood to fall within the scope of the present invention.

## Claims

1. A user terminal device comprising:
a storing unit;
a communicating unit performing communication with an external device;
a display unit displaying an image stored in the storing unit or an image received through the communicating unit;
an object generating unit generating an interactive object that is to be added to the displayed image and adding the interactive object to the image to generate a playable object; and
a controlling unit displaying the playable object through the display unit and transmitting the playable object to the external device through the communicating unit to share the playable object with the external device.

2. The user terminal device as claimed in claim 1, wherein the controlling unit modifies the playable object depending on a user gesture for the playable object displayed on the display unit when the user gesture is sensed and transmits the modified playable object to the external device to share the modified playable object with the external device.

3. The user terminal device as claimed in claim 2, wherein the communicating unit receives a modified playable object when a modification for the playable object is made on a screen of the external device, and
the controlling unit displays the received playable object through the display unit to allow the received playable object to interwork with the screen of the external device.

4. The user terminal device as claimed in claim 1, wherein the controlling unit controls the object generating unit to generate the interactive object using an attribute of a selected music content when one of music contents pre-stored in the storing unit is selected.

5. The user terminal device as claimed in claim 1, wherein the object generating unit generates the interactive object by reflecting surrounding environment information.

6. The user terminal device as claimed in claim 1, wherein the controlling unit displays a set screen for an attribute parameter of the interactive object on the display unit when an adjusting command for adjusting the playable object is input, and controls the object generating unit to adjust a display attribute of the interactive object depending on a set value when the attribute parameter value is set through the set screen.

7. The user terminal device as claimed in claim 1, wherein the controlling unit controls the object generating unit to generate an interactive object representing an animation effect when an animation menu is selected.

8. The user terminal device as claimed in any one of claims 1 to 7, wherein the external device is at least one of another user terminal device, a web server, a cloud server, and a social network service (SNS) server, and
the controlling unit allows the playable object to be included in a reply message for a content page provided from the external device and transmits the reply message to the external device.

9. An interaction method using a user terminal device, comprising:
displaying an image;
generating an interactive object that is to be added to the image;
generating a playable object by adding the interactive object to the image;
displaying the playable object; and
transmitting the playable object to an external device to share the playable object with the external device.

10. The interaction method using a user terminal device as claimed in claim 9, further comprising:
sensing a user gesture for the displayed playable object;
modifying the playable object depending on the user gesture; and
transmitting the modified playable object to the external device to share the modified playable object with the external device.

11. The interaction method using a user terminal device as claimed in claim 10, further comprising:
receiving a modified playable object when a modification for the playable object is made on a screen of the external device; and
displaying the received playable object to allow the received playable object to interwork with the screen of the external device.

12. The interaction method using a user terminal device as claimed in claim 9, further comprising displaying a selection screen for music contents stored in the user terminal device,
wherein the interactive object is generated depending on an attribute of a music content selected on the selection screen.

13. The interaction method using a user terminal device as claimed in claim 9, wherein the interactive object is generated depending on surrounding environment information.

14. The interaction method using a user terminal device as claimed in claim 9, further comprising:
displaying a set screen for an attribute parameter of the interactive object; and
adjusting a display attribute of the interactive object depending on an attribute parameter value set through the set screen.

15. The interaction method using a user terminal device as claimed in claim 9, further comprising: displaying an animation menu,
wherein the interactive object includes an object for representing an animation effect when the animation menu is selected.
